# EUROPÄISCHE PATENTANMELDUNG

(11) **EP 4 422 011 A1**
(43) Veröffentlichungstag der Anmeldung: **28.08.2024**
(21) Anmeldenummer: 23158565.4
(22) Anmeldetag: 24.02.2023
(51) Int. Cl.: H02J 1/04, H02J 3/32, H02J 3/38, H02J 4/00, H02J 7/00, H02J 7/34

(54) **DEZENTRALES ENERGIESPEICHERSYSTEM UND DEZENTRALES ENERGIEVERSORGUNGSSYSTEM**

(71) Anmelder: Murrelektronik GmbH, 71570 Oppenweiler (DE)
(72) Erfinder: Ruf, Henrik, 71570 Oppenweiler (DE); Wolff, Ingo, 71570 Oppenweiler (DE); Kübler, Christian, 71570 Oppenweiler (DE)
(74) Vertreter: Prinz & Partner mbB

(57) **Zusammenfassung**

Die Erfindung betrifft ein dezentrales Energiespeichersystem (12) für ein autarkes oder mit einem Versorgungsnetz (16) verbundenes Energienetz (14), mit zumindest einem ersten Spitzenlastspeicher (36), der an einem ersten Speicherort angeordnet ist, zumindest einem zweiten Spitzenlastspeicher (38), der an einem zweiten Speicherort angeordnet ist, und zumindest einem Grundlastspeicher (40), wobei wenigstens der Grundlastspeicher (40) und der erste Spitzenlastspeicher (36) bei einem Abnehmer (28) des Energienetzes (14) vorgesehen sind, wobei der Grundlastspeicher (40) auf einer anderen Speichertechnologie als die Spitzenlastspeicher (36, 38) basiert, wobei das dezentrale Energiespeichersystem (12) eine Steuerungseinheit (46) umfasst, die eingerichtet ist, Lade- und/oder Entladezyklen der Spitzenlastspeicher (36, 38) und des zumindest einen Grundlastspeichers (40) anzusteuern, wobei die Spitzenlastspeicher (36, 38) und der zumindest eine Grundlastspeicher (40) elektrisch miteinander verbunden sind, und wobei zumindest der erste Speicherort und der zweite Speicherort voneinander beabstandet sind. Ferner betrifft die Erfindung ein dezentrales Energieversorgungsystem (10).

## Beschreibung

Die Erfindung betrifft ein dezentrales Energiespeichersystem für ein autarkes oder mit einem Versorgungsnetz verbundenes Energienetz. Ferner betrifft die Erfindung ein dezentrales Energieversorgungssystem mit einem dezentralen Energiespeichersystem.

Insbesondere bei regenerativen Energiequellen wie Solar oder Wind kann die Erzeugung der Energie unabhängig vom tatsächlichen Verbrauch sein, sodass überschüssige Energie erzeugt wird. Um diese überschüssige Energie nicht unnötig zu verbrauchen, bspw. in Wärme umsetzen, wird diese (überschüssige) Energie typischerweise zwischengespeichert.

Wenn es darum geht, größere Mengen elektrische Energie zu speichern, kommen derzeit oft Akkumulatoren mit einer bestimmten Akkutechnologie zum Einsatz. Jede Akkutechnologie hat dabei spezifische Vor- und Nachteile.

Derzeit häufig eingesetzte Akkutechnologien zum Speichern von größeren Energiemengen sind Blei- und Lithium-Ionen-Akkumulatoren. Es setzen sich aber auch immer mehr alternative Akkutechnologien wie Salzwasserbatterien (auch Natrium-Ionen Batterien genannt) oder die Zebrabatterie (auch Natrium-Nickelchlorid Batterie genannt) durch. Insbesondere diese Technologien können nur relativ langsam geladen und entladen werden. Hingegen bietet diese Technologie große Vorteile in Hinsicht der Kosten, Sicherheit und Umweltverträglichkeit gegenüber den etablierten Technologien.

In vielen aktuellen Energiespeichersystemen und/oder Energieversorgungssystemen sind die Eigenschaften der Speicher nicht optimal auf die jeweilige Energieerzeugungssituation und/oder den Energieverbrauch ausgelegt. So kann es vorkommen, dass benötigte Spitzenlasten nicht vollständig oder nicht schnell genug bereitgestellt werden können und/oder eine vorhandene elektrische Energie nicht schnell genug abgespeichert werden kann. Infolgedessen kommt es zu Energieverlusten.

Aufgabe dieser Erfindung ist es, durch die Kombinatorik von verschiedenen Speichertechnologien und deren Ansteuerung eine optimierte Speicherung von Energie zu ermöglichen.

Die Aufgabe wird erfindungsgemäß gelöst durch ein dezentrales Energiespeichersystem für ein autarkes oder mit einem Versorgungsnetz verbundenes Energienetz, mit zumindest einem ersten Spitzenlastspeicher, der an einem ersten Speicherort angeordnet ist. Das Energienetz kann also autonom ausgebildet oder mit dem Versorgungsnetz verbunden sein. Zudem weist das Energiespeichersystem zumindest einen zweiten Spitzenlastspeicher auf, der an einem zweiten Speicherort angeordnet ist. Ferner weist das Energiespeichersystem zumindest einen Grundlastspeicher auf. Der wenigstens eine Grundlastspeicher und der erste Spitzenlastspeicher sind bei einem Abnehmer des Energienetzes vorgesehen. Der Grundlastspeicher basiert auf einer anderen Speichertechnologie als die Spitzenlastspeicher. Zudem umfasst das Energiespeichersystem eine Steuerungseinheit, die eingerichtet ist, Lade- und/oder Entladezyklen der Spitzenlastspeicher und des zumindest einen Grundlastspeichers anzusteuern. Die Spitzenlastspeicher und der zumindest eine Grundlastspeicher sind elektrisch miteinander verbunden. Zumindest der erste Speicherort und der zweite Speicherort sind voneinander beabstandet.

Abnehmer können dabei beispielsweise Betriebe, Industrieanlagen und/oder Industriegelände sein. Der Abnehmer ist also beispielsweise ein Kunde. Mit anderen Worten handelt es sich bei dem Abnehmer nicht um einen elektrischen Verbraucher. Bei dem Abnehmer können aber mehrere elektrische Verbraucher vorgesehen sein.

Bei dem Energienetz kann es sich beispielsweise um ein Gesamtnetz handeln, an dem mehrere Abnehmer und Energieerzeuger wie Solaranlagen oder Windkraftanlagen angeschlossen sind. Das Gesamtnetz ist vorzugsweise mit dem öffentlichen Versorgungsnetz verbunden.

Es ist insbesondere denkbar, dass das Energienetz ein Niederspannungsnetz ist, welches beispielsweise innerhalb eines Betriebes oder einer Haustechnik vorgesehen ist.

Der Grundgedanke der Erfindung ist es, verschiedene Speichertechnologien zu kombinieren, um deren individuelle Vorteile nutzbar zu machen. Die verschiedenen Speicher werden dabei im Energienetz geschickt verteilt. Dadurch kann an der gewünschten Stelle, insbesondere direkt beim Abnehmer, bei Bedarf die passende Energiemenge aus einem nahegelegenen Speicher bereitgestellt werden.

Durch die kurzen Wege zwischen dem Abnehmer, insbesondere den elektrischen Verbrauchern beim Abnehmer, und dem Grundlastspeicher sowie dem ersten Spitzenlastspeicher werden unnötige Leistungsverluste beim Transport der Energie im Energienetz vermieden. Die entsprechenden Leitungen sind demnach kurz ausgelegt, sodass Leitungsverluste minimiert werden können.

Zudem können die Leitungen mit kleinerem Querschnitt ausgelegt werden, da der Stromfluss über weite Teile des Netzes konstant gehalten werden kann. Die Stromtragfähigkeit für die Spitzenlast muss nur bis zum nächsten Spitzenlastspeicher beachtet werden. Dies spart Material und damit auch Kosten.

Da die Grund- und Spitzenlastspeicher außerdem auf unterschiedlichen Speichertechnologien basieren wird gewährleistet, dass die Energie schnell genug, lang genug und in ausreichender Menge am richtigen Ort zur Verfügung gestellt werden kann.

Ein weiterer Abnehmer kann durch den zweiten Spitzenlastspeicher versorgt werden, der vom ersten Spitzenlastspeicher beabstandet angeordnet ist.

Der zweite Spitzenlastspeicher kann also bei einem anderen Abnehmer vorgesehen sein. Alternativ ist auch denkbar, dass der erste und der zweite Spitzenlastspeicher bei demselben Abnehmer, also beispielsweise innerhalb eines Betriebes, beabstandet voneinander angeordnet sind, um dort für verschiedene Betriebsanlagen bedarfsgerecht Energie bereitzustellen.

In einer bevorzugten Ausführungsform ist vorgesehen, dass der zumindest eine Grundlastspeicher eine C-Rate hat, die geringer ist als eine C-Rate der Spitzenlastspeicher, insbesondere um einen Faktor 10 geringer.

Die C-Rate gibt an, wie schnell ein Speicher geladen und/oder entladen werden kann. Die C-Rate ergibt sich aus dem auf die Kapazität Cn des Speichers bezogenen Lade- bzw. Entladestrom I (C-Rate=I/Cn [1/h]).

Generell weisen die Speicher unterschiedlicher Speichertechnologien häufig stark unterschiedliche C-Raten auf. So haben Speicher, die aus Umwelt-, Gefahren- und/oder Kostenaspekten Vorteile bieten, oft eine eher niedrige C-Rate. Hier sind insbesondere Salzwasserbatterie und Bleiakkumulatoren zu nennen, die mit C-Raten von 0,2 bis 0,3 nur verhältnismäßig langsam geladen bzw. entladen werden können. Darüber hinaus gibt es aber auch Akkutechnologien, z.B. Lithiumionenakkumulatoren, die derzeit hohe C-Raten bis zu 3 aufweisen und somit verhältnismäßig schnell geladen bzw. entladen werden können.

Durch die Kombination von verschiedenen Speichern, z.B. der Salzwasserbatterie als Grundlastspeicher und Lithiumionenakkumulatoren als Spitzenspeicher, lassen sich die positiven Eigenschaften der beiden Technologien kombinieren. Es kann also ein auf vorgegebene Anforderungen abgestimmtes Speichersystem geschaffen werden, das einerseits Energie schnell genug bereitstellen kann und andererseits Umwelt- und Kostenvorteile bietet, insbesondere die Effizienz verbessert.

Beispielsweise ist vorgesehen, dass zumindest einer der Spitzenlastspeicher und der Grundlastspeicher über eine vom Energienetz separat ausgebildete Versorgungsleitung miteinander verbunden sind, über die der entsprechende Spitzenlastspeicher aus dem Grundlastspeicher geladen werden kann.

Dadurch kann in Zeitintervallen, in denen der Abnehmer wenig oder keine Energie benötigt, im Grundlastspeicher gespeicherte Energie in den Spitzenlastspeicher übertragen werden, sofern der Spitzenlastspeicher nicht vollständig geladen ist. Dadurch wird gewährleistet, dass der Spitzenlastspeicher (stets) schnell und ausreichend viel Energie bereitstellen kann, wenn der Abnehmer diese anfordert. Durch die separate Versorgungsleitung muss zum Laden nicht auf die Ressourcen des Energienetzes zurückgegriffen werden. Die Ansteuerung ist entsprechend einfach und fehlerunanfällig. Mit anderen Worten kann die eine vom Energienetz separat ausgebildete Versorgungsleitung eine zum Energienetz redundante Leitung sein.

Dieser Energieaustausch kann auch umgekehrt erfolgen, wenn beispielsweise viel Energie zur Verfügung stehen und wenig Energie beim Abnehmer verbraucht bzw. benötigt wird, also durch die elektrischen Verbraucher beim Abnehmer. Beispielsweise kann dies bei einer zugeordneten Solaranlage der Fall sein, wenn es sehr sonnig ist, wie bei der Mittagssonne.

Insofern kann der Grundlastspeicher und der Spitzenlastspeicher auch als Grundenergiespeicher bzw. Spitzenenergiespeicher bezeichnet werden, da die Speicher nicht nur zur entsprechenden Lastabdeckung dienen, sondern auch Energie (zwischen-)speichern.

Insbesondere kann das Energiespeichersystem auch dazu ausgebildet sein, elektrische Energie aus dem zumindest einen Grundlastspeicher in zumindest einen der Spitzenlastspeicher zu übertragen, insbesondere wobei die Übertragung vorzugsweise mittels Gleichstrom erfolgt. Durch die Gleichstromübertragung kann eine Wandlung in Wechselstrom und anschließende Rückumwandlung vermieden werden. Entsprechend fallen keine Umwandlungsverluste an.

Ferner ist denkbar, dass die Steuerungseinheit eingerichtet ist, bei einem Ausfall eines der Speicher zumindest einen verbleibenden Speicher derart anzusteuern, dass eine Kompensationsenergie aus dem verbleibenden Speicher abgerufen wird. Dadurch ist das dezentrale Energiespeichersystem entsprechend weniger anfällig gegenüber Fehlern und/oder Angriffen. Der ausgefallene Speicher kann während eines Regelbetriebes des Energiespeichersystems repariert oder ersetzt werden, insbesondere ohne die Energieversorgung unterbrechen zu müssen.

In einer weiteren Variante ist die Steuerungseinheit eingerichtet, Umgebungsbedingungen bei der Ansteuerung der Lade- und/oder Entladezyklen der Spitzenlastspeicher und des zumindest einen Grundlastspeichers einzubeziehen. Es können Umweltaspekte, Gefahren wie Brand und Explosion, aktuelle Energiekosten und/oder Verfügbarkeiten berücksichtigt werden, um eine sichere und kostenoptimierte Energieversorgung zu gewährleisten.

Denkbar ist auch, dass das dezentrale Energiespeichersystem ein Gleichstromnetz oder zumindest zwei Teilnetze aufweist, von denen eines ein Gleichstromnetz und ein weiteres ein Wechselstromnetz ist. So kann ein erzeugter Gleichstrom, beispielsweise aus einer Solaranlage, direkt, also ohne Umwandlung in einen Wechselstrom, den Speichern zugeführt werden. Aus den Speichern wiederum kann dann Gleichstrom oder Wechselstrom zu den Abnehmern geleitet werden.

Eine besonders geeignete Einsatzmöglichkeit besteht in der Implementierung in einem DC-Niederspannungs-Energienetz. Dieses kann selbst ein Versorgungsnetz sein oder ein mit einem Versorgungsnetz verbundenes DC-Niederspannungsnetz.

Grundsätzlich kann durch die Verteilung der Energie, insbesondere beim Abnehmer, auf einen Wechselrichter verzichtet werden.

Ein weiterer Aspekt der Erfindung sieht vor, dass wenigstens der Grundlastspeicher und der erste Spitzenlastspeicher in Bezug auf das Versorgungsnetz einem Übergabepunkt nachgeschaltet sind. Mit anderen Worten kann das Energienetz mit den Speichern über den Übergabepunkt mit dem Versorgungsnetz verbunden sein. Überschüssige Energie kann an das Versorgungsnetz abgegeben werden, also in das Versorgungsnetz eingespeist werden. Andererseits kann aus dem Versorgungsnetz auch zusätzlich benötigte Energie bezogen bzw. entnommen werden. Am Übergabepunkt kann ein Stromzähler vorgesehen sein.

Die Aufgabe der Erfindung wird ferner gelöst durch ein dezentrales Energieversorgungssystem umfassend ein erfindungsgemäßes dezentrales Energiespeichersystem, ein mit einem Versorgungsnetz verbundenes Energienetz und eine Mehrzahl an Verbrauchern, die an verschiedenen Orten innerhalb des Energienetzes voneinander beabstandet angeordnet sind, sowie eine Mehrzahl an Erzeugern, die an verschiedenen Orten voneinander beabstandet angeordnet sind.

In diesem Zusammenhang wird unter einem Verbraucher ein Gerät verstanden, das elektrische Energie in eine andere Energieform umwandelt, bspw. kinetische Energie, thermische Energie oder chemische Energie. Dies kann zur direkten oder indirekten Verwendung geschehen. Insbesondere kann ein Verbraucher innerhalb eines Betriebes (also bei einem Abnehmer) zusammen mit vielen weiteren Verbrauchern angeordnet sein. Der Verbraucher kann auch als elektrischer Verbraucher bezeichnet werden.

Die Vorteile, die für das dezentrale Energiespeichersystem diskutiert wurden, gelten für das dezentrale Energieversorgungssystem in entsprechender Weise.

Bevorzugt ist der erste Spitzenlastspeicher direkt mit einem der Verbraucher elektrisch verbunden. So kann bei Bedarf elektrische Energie verlustarm vom Spitzenlastspeicher zum verbundenen Verbraucher geleitet werden.

In einer Variante des dezentralen Energieversorgungssystems ist vorgesehen, dass der erste Spitzenlastspeicher eine Speicherkapazität aufweist, die einer Energieverbrauchsspitze des direkt verbundenen Verbrauchers entspricht. Dadurch kann die gesamte vom Verbraucher benötigte Energie alleine aus dem ersten Spitzenlastspeicher bereitgestellt werden.

Es kann außerdem vorgesehen sein, dass die Spitzenlastspeicher im Energienetz verteilt angeordnet sind und das Energienetz auf einen vordefinierten Auslegewert ausgelegt ist, der vom Durchschnittsverbrauch im Energienetz abhängt, da die im Energienetz verteilt angeordneten Spitzenlastspeicher die Energie für Belastungsspitzen bereitstellen. Mit anderen Worten muss nicht das gesamte Energienetz auf die Übertragung der elektrischen Energie bei Belastungsspitzen ausgelegt sein, da diese Energie von den Spitzenlastspeichern lokal bereitgestellt werden kann.

Vorzugsweise ist das Energieversorgungssystem auf einen Strom unterhalb eines maximalen Stroms ausgelegt, insbesondere wobei das Energienetz eingerichtet ist, mit einem konstanten Strom betrieben zu werden. Der maximale Strom ist dabei der Strom, welcher maximal im Energieversorgungssystem auftreten kann, insbesondere zwischen einem Verbraucher und einem direkt verbundenen Spitzenlastspeicher. Da dieser maximale Strom jedoch nur lokal auftritt, muss nicht das gesamte Energienetz teuer und aufwendig auf diesen ausgelegt werden.

In einer weiteren Ausführungsform ist vorgesehen, dass das dezentrale Energieversorgungssystem zumindest einen Teil des Versorgungsnetzes umfasst. Es können die Energieerzeuger und/oder Verbraucher zumindest teilweise in dem Teil des Versorgungsnetzes angeordnet sein. So kann auf eine bereits vorhandene Versorgungsnetz-Infrastruktur zurückgegriffen werden. Es ist nicht notwendig ein komplexes Energienetz zu implementieren, welches sämtliche Energieerzeuger, Verbraucher und Speicher miteinander verbindet.

Ein weiterer Aspekt der Erfindung sieht vor, dass wenigstens der zweite Spitzenlastspeicher oder ein zweiter Grundlastspeicher direkt mit einem der Energieerzeuger verbunden ist, wobei der jeweilige Energieerzeuger ausgebildet ist, überschüssig erzeugte Energie direkt im zweiten Spitzenlastspeicher oder im zweiten Grundlastspeicher zu speichern. Es kann also nicht nur von den ersten Spitzenlast- bzw. Grundlastspeichern am Ort des Verbrauchs bzw. des Verbrauchers Energie bereitgestellt werden, sondern auch am Ort der Erzeugung Energie abgespeichert werden. Energie kann also unter weitgehender Vermeidung von Leitungsverlusten erzeugungsgerecht abgespeichert werden, was die Gesamtenergieeffizienz des Energieversorgungssystems erhöht. Ein Ausgleich zwischen den ersten und zweiten Grund- bzw. Spitzenlastspeichern kann dann erfolgen, wenn die Last im Energienetz besonders niedrig ist.

Weitere Merkmale und Vorteile der Erfindung ergeben sich aus der nachfolgenden Beschreibung sowie aus den Zeichnungen, auf die Bezug genommen wird. In den Zeichnungen zeigen:
- Fig. 1 eine schematische Darstellung eines ersten Ausführungsbeispiels eines dezentralen Energieversorgungssystems;
- Fig. 2 eine schematische Darstellung eines zweiten Ausführungsbeispiels eines dezentralen Energieversorgungssystems;
- Fig. 3 eine schematische Darstellung eines Energieverbrauchs und einer Energieproduktion in einem dezentralen Energieversorgungssystem;
- Fig. 4 eine schematische Darstellung eines Ladezustandes eines Grundlastspeichers; und
- Fig. 5 eine schematische Darstellung eines Ladezustandes eines Spitzenlastspeichers.

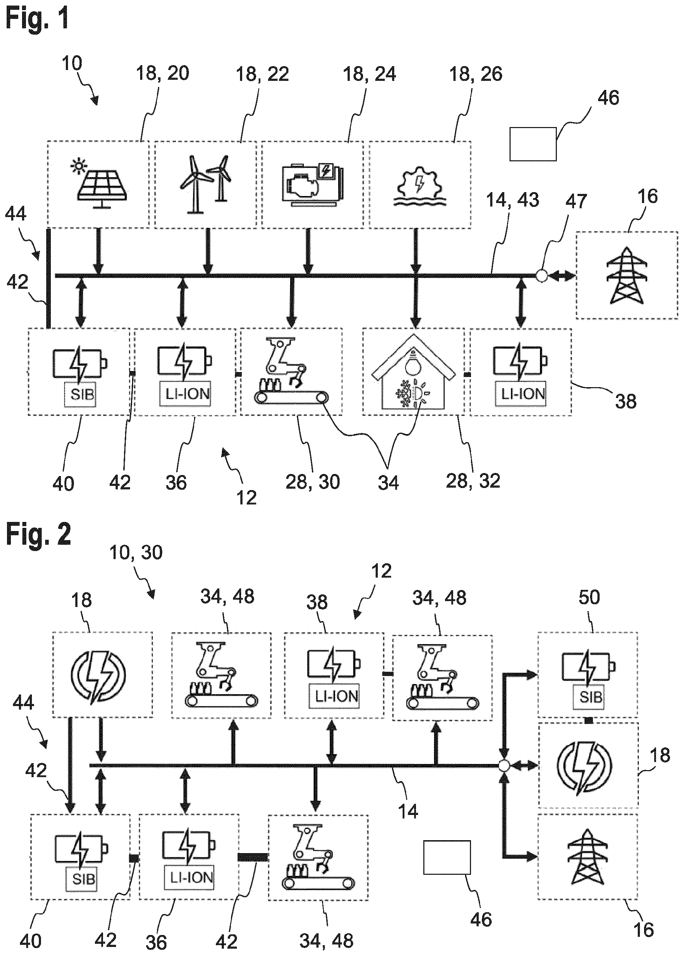

Figur 1 zeigt ein erstes Ausführungsbeispiel eines dezentralen Energieversorgungssystems 10. Dieses umfasst ein erfindungsgemäßes dezentrales Energiespeichersystem 12 und ein Energienetz 14, das mit einem Versorgungsnetz 16 verbunden ist, beispielsweise einem öffentlichen Versorgungsnetz.

Das dezentrale Energieversorgungssystem 10 umfasst eine Mehrzahl an Energieerzeugern 18, beispielsweise ein Solarkraftwerk 20, eine Windkraftanlage 22, eine Gasturbine 24 und/oder ein Wasserkraftwerk 26, die an verschiedenen Orten voneinander beabstandet angeordnet sind. Selbstverständlich sind die Art und Anzahl der genannten Energieerzeuger 18 nicht einschränkend zu verstehen.

In dem dezentralen Energieversorgungssystem 10 sind ferner eine Mehrzahl an Abnehmern 28 des Energienetzes 14 angeordnet, beispielsweise eine Industrieanlage 30 sowie Haustechnik 32.

Die Abnehmer 28 können wiederum jeweils einen oder mehrere (elektrische) Verbraucher 34 umfassen, beispielsweise Geräte, Maschinen, Beleuchtungsmittel und vieles mehr.

Insbesondere umfasst eine Industrieanlage 30 mehrere (elektrische) Verbraucher 34, also mehrere Maschinen und/oder Geräte, beispielsweise einen Industrieroboter, ein Förderband usw.

Im Ausführungsbeispiel bilden die Verbraucher 34 einen Bestandteil des dezentralen Energieversorgungssystems 10.

Das dezentrale Energiespeichersystem 12 ist dazu ausgebildet, die von den Energieerzeugern 18 erzeugte elektrische Energie zwischenzuspeichern und das Energienetz 14, bzw. die Abnehmer 28 bei Bedarf mit elektrischer Energie zu versorgen.

Zu diesem Zweck umfasst das dezentrale Energiespeichersystem 12 einen ersten Spitzenlastspeicher 36, der an einem ersten Speicherort angeordnet ist, und einen zweiten Spitzenlastspeicher 38, der an einem zweiten Speicherort angeordnet ist. Der erste und der zweite Speicherort sind voneinander beanstandet, um an verschiedenen Stellen innerhalb des dezentralen Energiespeichersystems 12 in ausreichender Menge Energie bereitstellen zu können.

Im Ausführungsbeispiel sind der erste und der zweite Spitzenlastspeicher 36, 38 jeweils Lithium-Ionen-Akkumulatoren mit hohen C-Raten von ungefähr 3. Durch die hohen C-Raten können die Spitzenlastspeicher 36, 38 im Bedarfsfall schnell Energie liefern.

Ferner umfasst das dezentrale Energiespeichersystem 12 zumindest einen Grundlastspeicher 40. Dieser ist im Ausführungsbeispiel eine Salzwasserbatterie mit einer vergleichsweise niedrigen C-Rate von 0,2. Im Vergleich zu den Lithium-Ionen-Akkumulatoren weist die Salzwasserbatterie niedrigere Lade- bzw. Entladeströme und eine geringere Energiedichte auf. Dafür ist sie vergleichsweise robust und günstig, weshalb sie sich gut zur Bereitstellung einer Grundlast eignet.

Der Grundlastspeicher 40 und der erste Spitzenlastspeicher 36 sind im Ausführungsbeispiel in unmittelbarer Nähe zu einem der Abnehmer 28 (vorliegend der Industrieanlage 30) angeordnet, sodass sie diesen im Bedarfsfall, insbesondere bei Lastspitzen, ideal versorgen können.

Die Spitzenlastspeicher 36, 38 und der Grundlastspeicher 40 sind durch das Energienetz 14 elektrisch miteinander verbunden.

Zusätzlich sind der erste Spitzenlastspeicher 36 und der Grundlastspeicher 40 über eine vom Energienetz 14 separat ausgebildete Versorgungsleitung 42 elektrisch miteinander verbunden. Durch diese kann der erste Spitzenlastspeicher 36 bei Bedarf aus dem Grundlastspeicher 40 geladen werden.

Dazu findet im Ausführungsbeispiel eine Gleichstromenergieübertragung zwischen dem Grundlastspeicher 40 und dem ersten Spitzenlastspeicher 36 statt. So können Umwandlungsverluste vermieden werden.

Es kann auch vorgesehen sein, dass einer oder mehrere der Energieerzeuger 18 über eine weitere Versorgungsleitung 42 direkt mit dem Grundlastspeicher 40 verbunden sind.

Im Ausführungsbeispiel ist das Solarkraftwerk 20 direkt mit dem Grundlastspeicher 40 verbunden. Auch hier kann die Energieübertragung vom Energieerzeuger 18 zum Grundlastspeicher 40 mittels Gleichstrom erfolgen. Auf Wechselrichter kann in diesem Fall verzichtet werden.

Es ist auch möglich, dass das Energiespeichersystem 12 zusätzlich zu dem als Verteilnetz 43 ausgebildeten Energienetz 14 ein Gleichstromnetz 44 aufweist.

Das Verteilnetz 43 kann ein Wechselstromnetz oder ein Gleichstromnetz sein.

Beispielsweise bilden die Versorgungsleitungen 42 ein solches Gleichstromnetz 44, welches das Solarkraftwerk 20, den Grundlastspeicher 40 und den ersten Spitzenlastspeicher 36 miteinander verbindet und welches unabhängig vom Energienetz 14 betrieben werden kann.

Ferner weist das dezentrale Energiespeichersystem 12 eine Steuerungseinheit 46 auf, die eingerichtet ist, Lade- und/oder Entladezyklen der Spitzenlastspeicher 36, 38 und des Grundlastspeichers 40 anzusteuern.

Die Steuerungseinheit 46 ist insbesondere dazu eingerichtet, bei einem Ausfall eines der Speicher, beispielsweise des ersten Spitzenlastspeichers 36, zumindest einen der verbleibenden Speicher 38, 40 derart anzusteuern, dass eine Kompensationsenergie aus diesen abgerufen wird. Dadurch ist das dezentrale Energiespeichersystem 12 verglichen mit konventionellen Systemen sehr sicher und fehlerunanfällig.

Im Ausführungsbeispiel ist die Steuerungseinheit 46 außerdem dazu eingerichtet, Umgebungsbedingungen bei der Ansteuerung der Lade- und/oder Entladezyklen der Spitzenlastspeicher 36, 38 und des Grundlastspeichers 40 einzubeziehen, was die Energie- und/oder Kosteneffizienz des dezentralen Energieversorgungssystems 10 erhöht.

Beispielsweise werden aktuelle Strompreise, Wettervorhersagen, Energie und Bedarfsvorhersagen berücksichtigt und Energie kostengünstig aus dem Versorgungsnetz 16 bezogen, um die Speicher 36, 38, 40 aufzuladen. Selbstverständlich kann auch Energie an das Versorgungsnetz 16 abgegeben (verkauft) werden.

Unter anderem zu diesem Zweck weist das dezentrale Energiespeichersystem 12 im Ausführungsbeispiel einen Übergabepunkt 47 auf, der den Grundlastspeicher 40 und die Spitzenlastspeicher 36, 38 vom Versorgungsnetz 16 separiert.

Figur 2 zeigt ein zweites Ausführungsbeispiel eines dezentralen Energieversorgungssystems 10. Dieses entspricht in mehreren wesentlichen Merkmalen dem der in Figur 1 gezeigten Ausführungsform. Im Folgenden wird daher lediglich auf die Unterschiede eingegangen. Gleiche und/oder funktionsgleiche Elemente sind mit denselben Referenznummern gekennzeichnet.

Das in Figur 2 gezeigte dezentrale Energieversorgungssystem 10 ist im Gegensatz zur ersten Ausführungsform innerhalb einer größeren Industrieanlage 30 angeordnet. Es weist ein Energienetz 14 auf, welches sich über die gesamte Industrieanlage 30 erstreckt.

In der Ausführungsform umfasst das dezentrale Energieversorgungssystem 10 einen Teil eines Versorgungsnetzes 16. Dieser ist mit dem Energienetz 14 verbunden.

Die Industrieanlage 30 umfasst wiederum eine Mehrzahl an Verbrauchern 34, beispielsweise Produktionsmaschinen 48, die innerhalb der Industrieanlage 30 beabstandet voneinander angeordnet und jeweils an das Energienetz 14 angebunden sind.

Ferner weist das dezentrale Energieversorgungssystem 10 eine Mehrzahl an Energieerzeugern 18 auf, die ebenfalls voneinander beabstandet innerhalb der Industrieanlage 30 angeordnet und jeweils an das Energienetz 14 angebunden sind.

Das dezentrale Energieversorgungssystems 10 umfasst außerdem ein dezentrales Energiespeichersystem 12 mit einem ersten Spitzenlastspeicher 36, einem zweiten Spitzenlastspeicher 38, einem ersten Grundlastspeicher 40 und einem zweiten Grundlastspeicher 50.

Der erste Spitzenlastspeicher 36 ist mittels einer Versorgungsleitung 42 direkt mit einem der Verbraucher 34 Verbunden. Er weist eine Speicherkapazität auf, die einer Energieverbrauchsspitze des direkt verbunden Verbrauchers 34 entspricht. Dadurch kann die gesamte während der Energieverbrauchsspitze benötigte Energie aus dem ersten Spitzenlastspeicher 36 bereitgestellt werden.

Auch der zweite Spitzenlastspeicher 38 ist direkt mit einem der Verbraucher 34 verbunden und dazu ausgebildet, die bei einer Energieverbrauchsspitze des Verbrauchers 34 benötigte Energie bereitzustellen.

Da die Verbraucher 34 im Energienetz 14 verteilt angeordnet sind, sind auch der erste und der zweite Spitzenlastspeicher 36, 38, die sich in unmittelbarer Nähe zu den jeweiligen Verbrauchern 34 befinden, voneinander beabstandet.

Das Energienetz 14 ist im Ausführungsbeispiel auf einen vordefinierten Auslegewert ausgelegt, der vom Durchschnittsverbrauch aller Verbraucher 34 im Energienetz 14 abhängt. Eine Auslegung auf die Energieverbrauchsspitzen ist nur eingeschränkt notwendig, da die in den Lastspitzen benötigte Energie unmittelbar durch die Spitzenlastspeicher 36, 38 bereitgestellt werden kann und nicht das gesamte Energienetz 14 belasten, sondern nur Teilabschnitte dessen.

Bei dem Auslegewert kann es sich beispielsweise um einen Stromwert handeln. Im Energienetz 14 kann ein zumindest annähernd konstanter Stromwert vorgesehen sein, um den Durchschnittsverbrauch abzudecken. Dieser Stromwert kann insbesondere deutlich niedriger sein, als ein maximaler Stromwert, der bei den Energieverbrauchsspitzen zwischen den Spitzenlastspeichern 36, 38 und den jeweils direkt verbundenen Verbrauchern 34 vorliegt.

Wird im dezentralen Energieversorgungssystem 10 mittels der Energieerzeuger 18 eine Überschussenergie erzeugt, welche nicht unmittelbar durch die Verbraucher 34 verbraucht werden kann, so wird diese in den Grund- bzw. Spitzenlastspeichern 36, 38, 40, 50 gespeichert.

Sowohl der erste also auch der zweite Grundlastspeicher 40, 50 sind zu diesem Zweck jeweils direkt bei einem der Energieerzeuger 18 angeordnet und mit diesem direkt über eine Versorgungsleitung 42 oder indirekt über das Energienetz 14 verbunden. Insbesondere durch die kurzen Wege sind die Energie-übertragungsverluste zwischen den Energieerzeugern 18 und den Grundlastspeichern 40, 50 sehr gering.

Wie auch im ersten Ausführungsbeispiel kann zwischen den Grundlastspeichern 40, 50 und den Spitzenlastspeichern 36, 38 Energie übertragen werden, insbesondere unmittelbar im Anschluss an eine Energieverbrauchsspitze, um die Spitzenlastspeicher 36, 38 schnell wieder aufzufüllen.

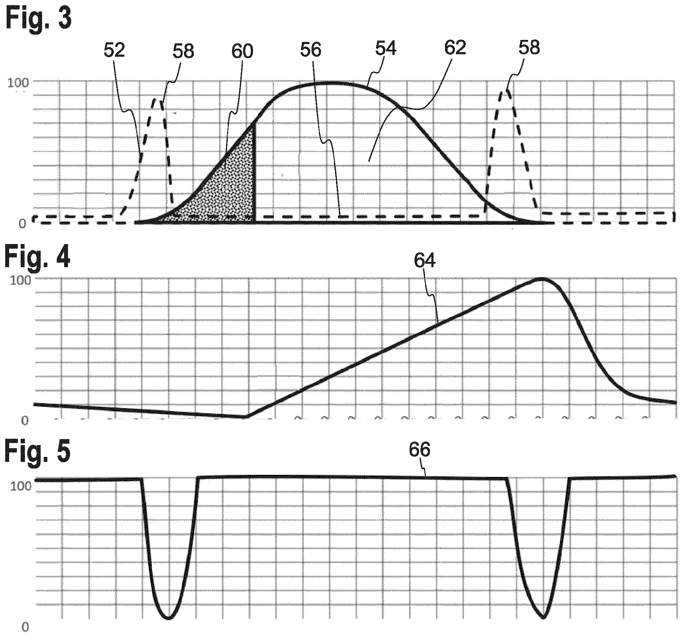

Nachfolgend werden der Energieverbrauch, die Energieproduktion sowie die Lade- und Entladevorgänge der Grundlastspeicher 40, 50 und Spitzenlastspeicher 36, 38 des dezentralen Energieversorgungsystems 10 beispielhaft anhand der Figuren 3 bis 5 erläutert.

Figur 3 zeigt eine schematische Darstellung eines Energieverbrauchsverlaufs 52 der Verbraucher 34 über einen Tag sowie eines Energieproduktionsverlaufs 54 der Energieerzeuger 18 (beispielsweise Solarkraftwerke 20) in einem dezentralen Energieversorgungssystem 10.

Der Energieverbrauchsverlauf 52 ist gekennzeichnet durch einen Grundverbrauch 56 sowie zwei Verbrauchsspitzen 58. Die Verbrauchsspitzen 58 können beispielsweise Anlaufspitzen der Produktionsmaschinen 48 sein.

Der Energieproduktionsverlauf 54 kann, wie in Figur 3 gezeigt, über den Tag variieren. So produzieren beispielsweise Solarkraftwerke 20 bei intensiver Sonneneinstrahlung zur Mittagszeit besonders viel Energie.

Ein erster Anteil 60 ("Ladeperiode Spitzenlastspeicher") dieser Energie kann beispielsweise dazu genutzt werden, um bei Bedarf die Spitzenlastspeicher 36, 38 direkt aufzuladen. Ein zweiter Anteil 62 ("Ladeperiode Grundlastspeicher") kann dagegen genutzt werden, um die Grundlastspeicher 40 ,50 zu laden.

Figur 4 zeigt eine schematische Darstellung eines Ladezustandes 64 ("Ladezustand Grundlastspeicher") des ersten Grundlastspeichers 40. Zunächst sinkt der Ladezustand 64, da die Energieerzeuger 18 zu Beginn des Tags kaum Energie produzieren und Energie zur Abdeckung des Grundverbrauchs 56 aus dem Grundlastspeicher 40 entnommen wird.

Im weiteren Verlauf des Tages steigt der Ladezustand 64 des ersten Grundlastspeichers 40 dann wieder an, da er durch die von den Energieerzeugern 18 erzeugte elektrische Energie geladen wird.

Wie in Figur 4 gezeigt, kann es jedoch sein, dass der Ladezustand 64 des Grundlastspeichers 40 anschließend wieder abfällt, weil eine Spitzenlastspeicherbeladung nach einer der Verbrauchsspitzen 58 notwendig ist und die Energie hierfür nicht direkt durch die Energieerzeuger 18 bereitstellbar ist.

Figur 5 zeigt eine schematische Darstellung eines Ladezustandes 66 ("Ladezustand Spitzenlastspeicher") des ersten Spitzenlastspeichers 36. Die Verbrauchsspitzen 58 werden, wie bereits beschrieben, durch Energie aus dem Spitzenlastspeicher 36 abgedeckt. Daher sinkt der Ladezustand 66 des ersten Spitzenlastspeichers 36 während der Verbrauchspitzen 58.

Die Energie, um den ersten Spitzenlastspeicher 36 wieder aufzufüllen, kann durch die Energieerzeuger 18 direkt und/oder durch einen der Grundlastspeicher 40, 50 bereitgestellt werden.

### Bezugszeichenliste

| Bezugszeichen | Benennung |
|---|---|
| 10 | Energieversorgungssystem |
| 12 | Energiespeichersystem |
| 14 | Energienetz |
| 16 | Versorgungsnetz |
| 18 | Energieerzeuger |
| 20 | Solarkraftwerke |
| 22 | Windkraftanlage |
| 24 | Gasturbine |
| 26 | Wasserkraftwerk |
| 28 | Abnehmer |
| 30 | Industrieanlage |
| 32 | Haustechnik |
| 34 | Verbraucher |
| 36 | Spitzenlastspeicher |
| 38 | Spitzenlastspeicher |
| 40 | Grundlastspeicher |
| 42 | Versorgungsleitung |
| 43 | Verteilnetz |
| 44 | Gleichstromnetz |
| 46 | Steuerungseinheit |
| 47 | Übergabepunkt |
| 48 | Produktionsmaschinen |
| 50 | Grundlastspeicher |
| 52 | Energieverbrauchsverlauf |
| 54 | Energieproduktionsverlaufs |
| 56 | Grundverbrauch |
| 58 | Verbrauchsspitzen |
| 60 | Ladeperiode Spitzenlastspeicher |
| 62 | Ladeperiode Grundlastspeicher |
| 64 | Ladezustand Grundlastspeicher |
| 66 | Ladezustand Spitzenlastspeicher |

## Patentansprüche

1. Dezentrales Energiespeichersystem für ein autarkes oder mit einem Versorgungsnetz (16) verbundenes Energienetz (14), mit zumindest einem ersten Spitzenlastspeicher (36), der an einem ersten Speicherort angeordnet ist, zumindest einem zweiten Spitzenlastspeicher (38), der an einem zweiten Speicherort angeordnet ist, und zumindest einem Grundlastspeicher (40), wobei wenigstens der Grundlastspeicher (40) und der erste Spitzenlastspeicher (36) bei einem Abnehmer (28) des Energienetzes (14) vorgesehen sind, wobei der Grundlastspeicher (40) auf einer anderen Speichertechnologie als die Spitzenlastspeicher (36, 38) basiert, wobei das dezentrale Energiespeichersystem (12) eine Steuerungseinheit (46) umfasst, die eingerichtet ist, Lade- und/oder Entladezyklen der Spitzenlastspeicher (36, 38) und des zumindest einen Grundlastspeichers (40) anzusteuern, wobei die Spitzenlastspeicher (36, 38) und der zumindest eine Grundlastspeicher (40) elektrisch miteinander verbunden sind, und wobei zumindest der erste Speicherort und der zweite Speicherort voneinander beabstandet sind.

2. Dezentrales Energiespeichersystem gemäß Anspruch 1, wobei der zumindest eine Grundlastspeicher (40) eine C-Rate hat, die geringer ist als eine C-Rate der Spitzenlastspeicher (36, 38), insbesondere um einen Faktor 10 geringer.

3. Dezentrales Energiespeichersystem gemäß Anspruch 1 oder 2, **dadurch gekennzeichnet, dass** zumindest einer der Spitzenlastspeicher (36, 38) und der Grundlastspeicher (40) über eine vom Energienetz (14) separat ausgebildete Versorgungsleitung (42) miteinander verbunden sind, über die der entsprechende Spitzenlastspeicher (36, 38) aus dem Grundlastspeicher (40) geladen werden kann.

4. Dezentrales Energiespeichersystem gemäß einem der vorhergehenden Ansprüche, dazu ausgebildet, elektrische Energie aus dem zumindest einen Grundlastspeicher (40) in zumindest einen der Spitzenlastspeicher (36, 38) zu übertragen, insbesondere wobei die Übertragung mittels Gleichstrom erfolgt.

5. Dezentrales Energiespeichersystem gemäß einem der vorhergehenden Ansprüche, wobei die Steuerungseinheit (46) eingerichtet ist, bei einem Ausfall eines der Speicher (36, 38, 40) zumindest einen verbleibenden Speicher (36, 38, 40) derart anzusteuern, dass eine Kompensationsenergie aus dem verbleibenden Speicher (36, 38, 40) abgerufen wird.

6. Dezentrales Energiespeichersystem gemäß einem der vorhergehenden Ansprüche, wobei die Steuerungseinheit (46) eingerichtet ist, Umgebungsbedingungen bei der Ansteuerung der Lade- und/oder Entladezyklen der Spitzenlastspeicher (36, 38) und des zumindest einen Grundlastspeichers (40) einzubeziehen.

7. Dezentrales Energiespeichersystem gemäß einem der vorhergehenden Ansprüche, aufweisend ein Gleichstromnetz (44) oder zumindest zwei Teilnetze, von denen eines ein Gleichstromnetz (44) und ein weiteres ein Wechselstromnetz (43) ist.

8. Dezentrales Energiespeichersystem gemäß einem der vorhergehenden Ansprüche, wobei wenigstens der Grundlastspeicher (40) und der erste Spitzenlastspeicher (36) in Bezug auf das Versorgungsnetz (16) einem Übergabepunkt (47) zwischengeschaltet sind.

9. Dezentrales Energieversorgungssystem umfassend ein dezentrales Energiespeichersystem (12) gemäß einem der vorhergehenden Ansprüche, ein mit einem Versorgungsnetz (16) verbundenes Energienetz (14) und eine Mehrzahl an Verbrauchern (34), die an verschiedenen Orten innerhalb des Energienetzes (14) voneinander beabstandet angeordnet sind und eine Mehrzahl an Energieerzeugern (18), die an verschiedenen Orten voneinander beabstandet angeordnet sind.

10. Dezentrales Energieversorgungssystem nach Anspruch 9, wobei der erste Spitzenlastspeicher (36) direkt mit einem der Verbraucher (34) oder Erzeuger (18) elektrisch verbunden ist.

11. Dezentrales Energieversorgungssystem nach Anspruch 10, wobei der erste Spitzenlastspeicher (36) eine Speicherkapazität aufweist, die einer Energieverbrauchsspitze des direkt verbunden Verbrauchers (34) entspricht.

12. Dezentrales Energieversorgungssystem nach einem der Ansprüche 9 bis 11, wobei die Spitzenlastspeicher (36, 38) im Energienetz (14) verteilt angeordnet sind, sodass das Energienetz (14) auf einen vordefinierten Auslegewert ausgelegt ist, der vom Durchschnittsverbrauch im Energienetz (14) abhängt, da die im Energienetz (14) verteilt angeordneten Spitzenlastspeicher (36, 38) die Energie für Belastungsspitzen bereitstellen.

13. Dezentrales Energieversorgungssystem nach einem der Ansprüche 9 bis 12, wobei das Energienetz (14) auf einen Strom unterhalb eines maximalen Stroms ausgelegt ist, insbesondere wobei das Energienetz (14) eingerichtet ist, mit einem konstanten Strom betrieben zu werden.

14. Dezentrales Energieversorgungssystem nach einem der Ansprüche 9 bis 13, wobei wenigstens der zweite Spitzenlastspeicher (38) oder ein zweiter Grundlastspeicher (50) direkt mit einem der Energieerzeuger (18) verbunden ist, und wobei der jeweilige Energieerzeuger (18) ausgebildet ist, überschüssig erzeugte Energie direkt im zweiten Spitzenlastspeicher (38) oder im zweiten Grundlastspeicher (50) zu speichern.
